Europäisches Patentamt

European Patent Office

Office européen des brevets

(19)

(11) Publication number: 0 135 460

A2

(12)

# EUROPEAN PATENT APPLICATION

(21) Application number: 84630109.1

(22) Date of filing: 24.07.84

(51) Int. Cl.⁴: F 02 D 41/00

(30) Priority: 25.07.83 US 512720

(43) Date of publication of application:
27.03.85 Bulletin 85/13

(84) Designated Contracting States:
DE FR GB IT SE

(71) Applicant: STANADYNE INC.
92, Deerfield Road
Windsor Connecticut(US)

(72) Inventor: Brady, C. Eugene
15 Lord Davis Lane
Avon Connecticut(US)

(72) Inventor: Goetsch, Henry E.
136 Rain Bow Trail
Vernon Connecticut(US)

(74) Representative: Weydert, Robert et al,
Office Dennemeyer S.à.r.l. 21-25 Allée Scheffer P.O. Box
41
L-2010 Luxembourg(LU)

(54) Electronic fuel control system for a fuel injection pump.

(57) An electronic fuel control system for a fuel injection pump employs a means to determine the quantity of fuel in a charge by sensing the commencement and termination of a fuel injection stroke and sensing the speed of the associated engine. An electronic processor means provides a signal indicative of an adjustment to be effected in a metering means for controlling the flow of fuel to a pumping chamber.

FIG. 1

EP 0 135 460 A2

Croydon Printing Company Ltd.

## Electronic Fuel Control System For A Fuel Injection Pump

## Background of the Invention

The present invention relates generally to fuel injection pumps of the type having a rotary charge pump with reciprocating pumping plungers for supplying measured charges of fuel under high pressure in sequence to the cylinders of an associated internal combustion engine, and relates more particularly to an improved system for controlling the quantity of fuel in the charges delivered to the associated engine by the fuel injection pump.

In a conventional fuel injection pump of a type such as disclosed in U.S. Patent No. 3,704,963 entitled "Fuel Pump" issued February 3, 1971 to Leonard N. Baxter and assigned to the assignee of the present invention, a fuel injection pump is adapted to deliver metered charges of fuel under high pressure sequentially to the cylinders of an associated internal combustion engine. In the above disclosed pump a cam member has opposed inwardly directed cam lobes defining a path of travel for a roller assembly supporting one or more pump plungers. The assembly and plungers are movable relative to the cam member so that the contour of the cam member is translated into a sequence of pumping strokes within a pumping chamber. The injection strokes produce high pressure pulses of fuel which are sequentially delivered through injection nozzles to the cylinders of the associated combustion engine.

A conventional fuel injection pump such as described above may employ a timing means to advance or retard the timing of the injection of fuel into the cylinder of the associated engine to provide optimum engine performance according to various engine operating characteristics such as engine speed, engine load, engine temperature, or engine altitude. The timing means conventionally takes the form of a hydraulically controlled timing piston which is connected to the cam member so that the position of the timing piston determines the angular position of the cam member to thereby advance or retard the timing of the pumping stroke relative to the top dead center of the corresponding cylinder of the associated engine. An example of a hydraulically controlled timing means is disclosed in U.S. Patent No. 3,771,506 entitled "Fuel Injection Pump and Automatic Timing Means Therefor" issued November 13, 1973 to Charles W. Davis.

The implementation of an efficient and reliable means for controlling the quantity of fuel in the successive fuel charges supplied by the fuel injection pump to the associated engine is a critical factor in obtaining optimum performance in the associated engine. Such a means to control the quantity of fuel by the limiting of the stroke of the plungers is disclosed in U.S. Patent 4,225,291 of G.W Bouwkamp et al entitled "Fuel Injection Pump and Plunger Control Means Therefor". In addition, a plunger stroke control limit for variably limiting the plunger stroke is disclosed in pending application Serial No. 472,074 filed March 4, 1983 which application is assigned to the assignee of the present application.

- 3 -                    0135460

Brief Summary Of The Invention

In accordance with the present invention, a new and improved fuel control system and method is directed to determining the quantity of fuel in a pump charge and to regulating the metering means which controls the quantity of fuel which flows to the pumping chamber of the fuel injection pump. Electronic means are provided to measure the quantity of fuel delivered by a fuel injection stroke by sensing the time interval between the commencement and termination of fuel injection strokes and correlating the time interval with the engine speed to determine the actual quantity of fuel in a fuel charge and also the difference between the actual quantity of fuel delivered and an optimum quantity of fuel. Suitable regulator means are provided to control the metering means to provide for an optimum quantity of fuel in the pumping chamber.

Briefly stated, the invention generally comprises a first sensor means which senses the commencement of a fuel injection stroke. A second sensor means senses the termination of a fuel injection stroke preferably by means of a magnetic pickup sensing the instant when the rollers of the plunger passes the midpoint of the lobe of the cam member. Signals generated by the first and second sensor means are employed to determine a time interval between the commencement and termination of a fuel injection stroke or a succeeding stroke. A third sensor means generates a signal indicative of the speed of the engine. An electronic processor means correlates the engine speed with the stroke time interval to determine the actual quantity of fuel in a fuel injection pulse. A memory means may also be provided which correlates an optimum fuel quantity with engine speed so that an appropriate adjustment can be effected in the metering means for controlling the optimum flow of fuel to the pumping chamber.

A stepper motor which controls the position of an inlet valve of the metering means in response to an electronic signal from the processor means may be employed to provide the proper control of the flow of fuel to the pumping chamber. Means are provided so that the control of the fuel flow is accomplished in a recurring manner. In a preferred embodiment, the first sensor means comprises a pressure transducer in the hydraulic timing cylinder which detects a reaction pulse in the timing means in reaction to the actuation of the pumping stroke. A first sensor means may also comprise either a motion transducer positioned on the timing piston or on the cam member.

The improved method for regulating the quantity of fuel delivered by a fuel injection system comprises generating a first signal indicative of the commencement of a fuel injection stroke, generating a second signal indicative of the termination of a fuel injection stroke, generating a third signal indicative of the speed of the engine, and regulating the metering means of the fuel injection pump in accordance with the first, second and third signals. In a preferred form of the method, a train of clocking signals is generated and counted with the second signal starting a count and the first signal of a succeeding fuel injection stroke terminating a count. The count is then correlated with the engine speed to determine the actual quantity of fuel delivered by the fuel injection stroke. Additional steps may be performed to obtain an optimum fuel quantity for a given speed and to compare the actual fuel quantity with an optimum fuel quantity to obtain a value indicative of a fuel adjustment to be effected through regulating the metering means of the fuel injection pump.

An object of the invention is to provide a new and improved electronic fuel control system for a fuel injection pump.

An object of the invention is to provide a new and improved electronic fuel control system for a fuel injection pump which regulates the quantity of fuel delivered by the fuel injection pump by means of regulating the metering means controlling the flow of fuel to the pumping chamber.

An object of the invention is to provide a new and improved electronic fuel control system for a fuel injection pump which determines the actual quantity of fuel being delivered by the fuel injection pump by means of determining the time duration of the fuel injection stroke and the speed of the associated engine.

A further object of the invention is to provide a new and improved electronic control system for a fuel injection pump which sequentially regulates the quantity of fuel delivered by the fuel injection pump in an efficient and reliable manner.

A still further object of the invention is to provide a new and improved electronic control system for a fuel injection pump which can be efficiently incorporated into a fuel injection pump in conjunction with other systems for controlling the timing and for limiting the quantity of fuel in the fuel charge delivered by the fuel injection pump.

Other objects and advantages of the invention will become apparent from the accompanying drawings and detailed description.

## Brief Description Of The Drawings

Fig. 1 is a side elevational view, partly in section, partly broken away, and partly in schematic, of a fuel injection pump incorporating the present invention.

Fig. 2 is an end elevational view of the fuel injection pump of Fig. 1, partly in section, partly broken away, and partly in schematic, together with a schematic diagram illustrating the present invention.

## Detailed Description

Referring now to the drawings in detail wherein like numerals are used to designate the same or like parts, a fuel injection pump 10 incorporating the present invention is of the type that supplies sequential measured pulses or charges of fuel under high pressure to the fuel injection nozzles (not shown) of an internal combustion engine (not shown). The pump has a housing 12 and a fuel distributing rotor 18 and drive shaft 20 journaled to the housing. The drive shaft 20 is adapted to be driven by the engine (not shown), and is coupled to rotor 18 by means of a diametral slot 19 in the outer end of the rotor 18 and an integral, axially extending tang 21 at the inner end of the shaft 20.

A vane-type low pressure fuel transfer pump 22 is provided at the outer end of rotor 18 and is driven by the rotor 18. The transfer pump 22 has an inlet 24 for receiving fuel from a fuel reservoir (not shown) and is connected to deliver fuel under transfer pump pressure via axial passage 28, annulus 31 and axial passage 30 to an inlet metering means 32 having an inlet metering valve 33, the details of which will be described below. A conventional pressure regulating valve 34 (partly shown) is provided to regulate the transfer pressure of the transfer pump 22 and to return excess fuel to the pump inlet 24. The pressure regulator 34 provides a transfer pressure which increases with engine speed in order to meet the increased fuel requirements of the associated engine and to, in addition, provide a speed correlated fuel pressure which may employed to operate pressure actuated mechanisms of the fuel pump.

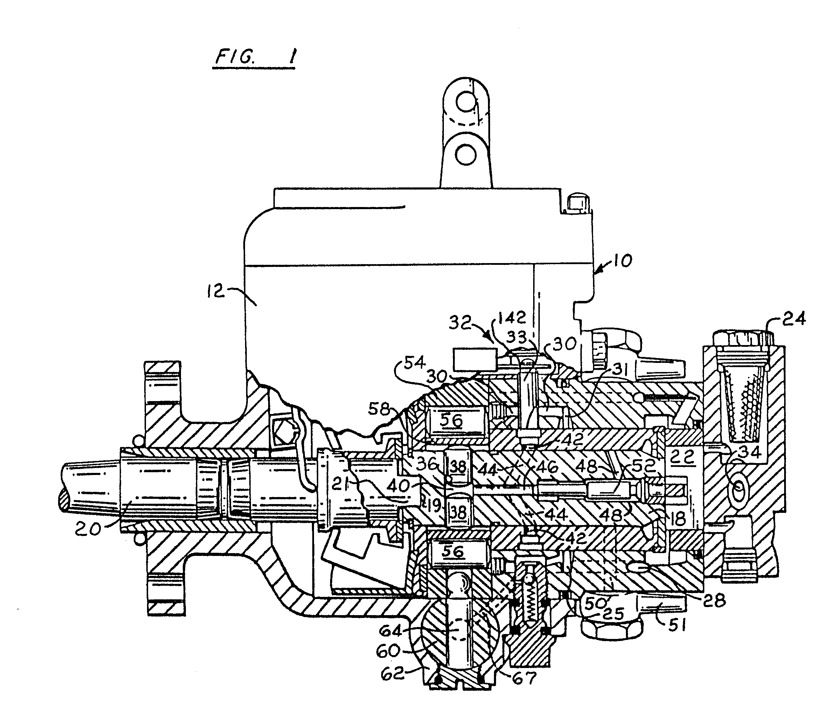

A high pressure rotary pumping means or charge pump comprises a pair of diametrically opposed coaxial plungers 38 mounted for reciprocation in a diametral bore 36 of the rotor 18. The charge pump receives in a pumping chamber 40 metered fuel from the metering valve 33 through a plurality of angularly spaced radial ports 42 (only two of which are illustrated in fig. 1) positioned for sequential registration with a diagonal inlet passage 44 of rotor 18 as the rotor rotates.

Fuel under high pressure from the charge pump is delivered through an axial bore 46 in the rotor 18 to a distributor passage 48 which registers sequentially with a plurality of angularly spaced outlet passages 50 (only one of which is illustrated in Fig. 1) which in sequence deliver the fuel charges to individual fuel injection nozzles (not shown) of the associated engine (not shown) via discharge fittings 51 spaced around the periphery of housing 12. A delivery valve 52 mounted in the axial bore 46 operates to achieve an abrupt cutoff of fuel to the fuel injection nozzles and to maintain a residual pressure in the downstream fuel delivery passages leading to the nozzles.

The fuel inlet ports 42 are angularly spaced around the rotor 18 to provide sequential registration with the diagonal inlet passage 44 during the outward or intake stroke of the plungers 38. The outlet passages 50 are similarly spaced to provide sequential registration with the distributor passage 48 during the inward compression or delivery stroke of the pump plungers 38.

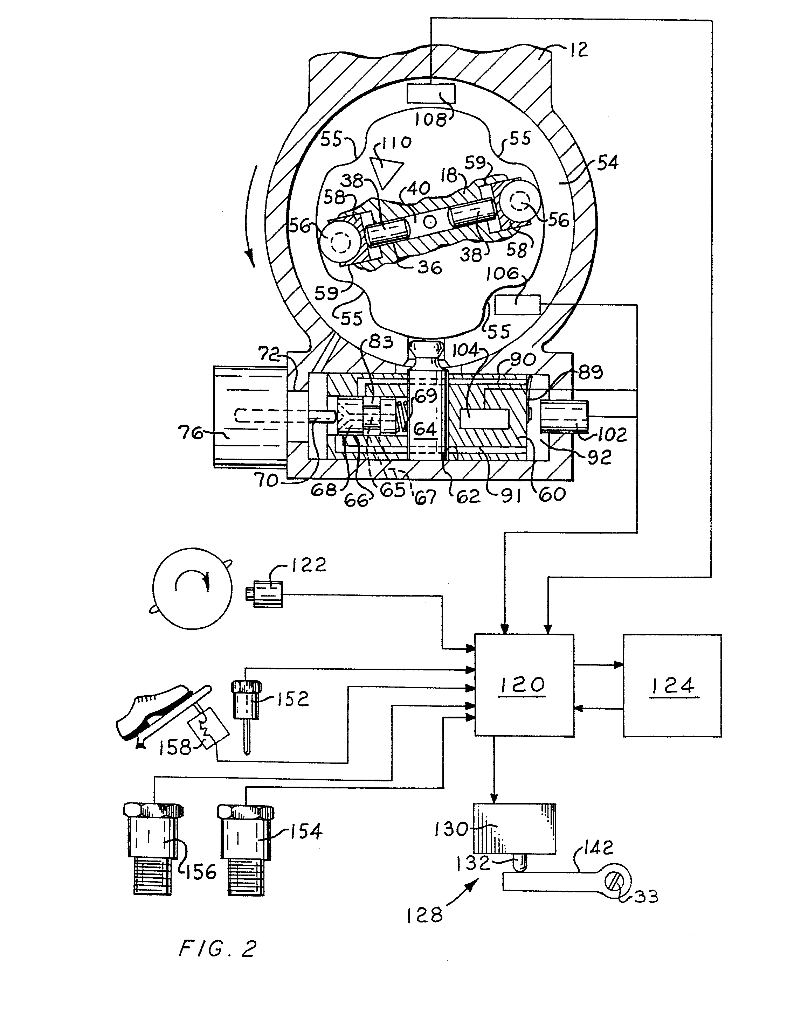

With specific reference to Fig. 2, an annular cam ring 54 having a plurality of pairs of circumferentially spaced, inwardly directed diametrically opposed cam lobes 55 is provided for simultaneously actuating the charge pump plungers 38 inwardly relative to pumping chamber 40 for delivering high pressure charges of fuel. A roller 56 and roller shoe 58 are mounted in radial alignment with each plunger 38 for translating the contour of the annular cam member 54 into coordinated relative movement of pump plungers 38 in a continuous inward and outward manner as the rotor 18 rotates relative to the cam ring member 54 to produce a sequence of fuel injection strokes for delivering high pressure charges of fuel. Axially extending radial slots 59 are provided in rotor 18 at the outer ends of the diametral plunger bore 36 for receiving the roller shoes 58. As can be ascertained from Fig. 2, when the rollers 56 and hence plungers 38 pass the midpoint of lobes 55, the fuel injection stroke is terminated, the point of minimum distance between opposing plungers 38 being obtained. As the rollers continue beyond the midpoint of lobes 55, the plungers 38 move outwardly and a new charge of fuel flows into the pumping chamber 40. Outward movement of pump plungers 38 occurs until indexing of passage 44 and port 42 is terminated, and once again, the plungers are forced inwardly to commence the next fuel injection pump stroke. The amount of fuel charge is regulated by the amount of flow restriction imposed by the metering valve 33 to alter flow velocity through the inlet porting.

The cam member 54 is mounted so that it can be angularly adjusted to control the timing of the fuel injection stroke engendered by the inward movement of the pump plungers 38 as described above. The timing of each of the pumping strokes can be adjusted to occur slightly sooner (advanced) or slightly later (retarded) as the drive shaft 20 and consequently rotor 18 rotates.

A timing piston 60 is mounted within a bore or cylinder 62 of housing 12. The cylinder 62 extends tangentially to and in substantially the same plane as the cam member 54. The timing piston 60 has a radial bore receiving a connector 64, and an upper rounded portion of connector 64 interacts with the cam member 54 for angularly shifting the cam member 54 according to the position of piston 60. With reference to Fig. 2, pumping forces tend to drive piston 60 to the right.

The position of piston 60 in cylinder 62 may be regulated by a number of means, none of which are the specific focus of the present invention. For purposes of illustration, piston 60 is illustrated in a form having an axial bore 66 receiving a servo valve or piston 68. The servo valve 68 is biased outwardly by a light compression spring 69 at the inner end of the servo valve bore 66. A shiftable servo valve operating pin 70 extends axially through an opening in the cylinder end wall 72 into engagement with the outer end of the servo valve 68 to establish the axial position of the servo valve 68. The inner end of the servo valve bore 66 is connected via an axial bore 65 through the servo valve 68 to its opposite end to balance the fuel pressure on the opposite ends of servo valve 68. The axial position of the pin 70 may be controlled in a number of ways such as by a bidirectional rotary stepping motor 76 which is actuated in response to a signal from a control module (not shown), which signal is indicative of various operating parameters of the fuel injection pump and associated engine.

Fuel under a regulated pressure is supplied by the transfer pump 22 via a passage 67 to a servo valve piston annulus 83. When the servo valve 68 is shifted outwardly to the left, as viewed in Fig. 2, the fuel is conducted through a reed check valve 89 to an operating chamber 92 (at the right end of the cylinder 62 as shown in Fig. 2) via an inlet port of a passage 90 in the control piston 60. At the same time, the servo valve 68 covers an outlet port of exhaust passage 91 to prevent flow of fuel from the chamber 92 to the outer low pressure end of bore 66. The timing piston 60 is thereby hydraulically actuated to the left as view in Fig. 2 until the servo valve is positioned to cover the inlet bore of passage 90 to thereby terminate the flow of fuel to the chamber 92.

When the servo valve 68 is shifted inwardly by pin 70 to the right as seen in Fig. 2, fuel is exhausted from the operating chamber 92 via the outlet passage 91. The timing piston 60 moves to the right as viewed in Fig. 2 until passage 91 is reclosed by servo valve 68. Accordingly, the timing piston 60 is hydraulically·positioned to match the axial position of the servo valve 68 and therefore the axial position of the actuator pin 70.

Having now described a fuel injection pump of a type to which the present invention is preferably incorporated, further reference is directed to Fig. 2 which illustrates in schematic form the general focus of the present invention wherein the · quantity of fuel introduced into the pumping chamber 40 for a fuel injection stroke produced by the inward movement of plungers 38 may be determined and an appropriate adjustment in the quantity of fuel subsequently permitted to be introduced into the chamber via metering means 32 may be suitably implemented.

In a preferred embodiment, a pressure sensor or transducer 102 is mounted at the end of the cylinder 62 for sensing hydraulic pressure spikes or pulses within the piston advance chamber 92. For each actuation of a fuel injection pumping stroke by the inward action of opposed plungers 38, a reaction force to the actuation of the plungers 38 is transmitted via the plunger operating cam member 54, connector 64, and timing piston 60 to the hydraulic fluid (fuel) in the timing piston advance chamber 92. Because of the relative incompressability of fuel, the reaction force produces a sharp hydraulic pressure pulse or spike in the operating chamber 92. Each such pressure spike is detected by sensor 102 and the sensor generates and transmits a corresponding electrical signal indicative of the fluid pressure spike occurrence. The pressure spike typically is of the order 400-600 psi. in the type of fuel injection pump shown and therefore significantly greater than the transfer fuel pressure within the operating chamber 92. A reed check valve 89 mounted on piston 60 to cover passage 90 prevents back flow from chamber 92. Sensor 102 does not measure the magnitude of the pressure pulse, but only the occurrence of a pulse at, for example, 300 psi. or above. Thus, the sensor 102 does not have to be calibrated, and a relatively inexpensive sensor can be employed to provide a reliable pickup. Suitable transducers are available under the name "Celesco LD-25" or "Drystal 6005".

The instant of the occurrence of the commencement of the fuel injection stroke can be determined from the signal generated by sensor 102.

Alternately, the detection of the occurrence of the commencement of a fuel injection stroke may be accomplished by a motion transducer 104 positioned on timing piston 60. Transducer 104 detects the reaction of piston 60 to the actuation of the fuel injection stroke. A motion transducer 106 which is affixed to cam member 54 and which detects the rapid kick motion of cam member 54 at the commencement of the fuel injection stroke can also be employed to detect the occurrence of the commencement of the fuel injection stroke. It is understood that only one of the sensors 102, 104, or 106 need be employed.

The point at which a roller 56 passes the midpoint of a lobe 55 determines the occurrence of the termination of the fuel injection stroke since the minimum inward relative position of plungers 38 is attained. The instant of termination of a fuel injection stroke may be determined by means of a magnetic pickup 108 mounted on cam 54 which detects the angular position of rotor 18 by sensing the passage of a tooth 110 which is mounted in a fixed angular relation to rotor 18. The physical position of the magnetic pickup 108 and tooth 110 are not critical since means can be suitably provided to calibrate the event detected by the magnetic pickup with the actual instant of the termination of fuel injection, i.e., the instant when the roller passes the lobe midpoint. In a preferred form, the magnetic pickup 108 is positioned at the top of cam member 54. It is not required that magnetic pickup 108 be mounted to cam member 54. If magnetic pickup 108 is not mounted to cam member 54, a

- 14 -

0135460

knowledge of the position of cam member 54 must be correlated with the event detected by magnetic pickup 108. The cam position knowledge is electronically available.

An electronic processor means 120 which may assume a variety of forms, is provided to process the signals emanating from the magnetic pickup 108 and transducers 102, 104, or 106 to determine the time interval between the instant of commencement and the instant of the termination of a fuel injection stroke. The latter time interval can be correlated with the engine speed which may be obtained by a number of conventional means such as a magnetic pickup 122 to determine the quantity of fuel displaced from the pumping chamber 40 for a given injection stroke on the principle that the time interval of plunger displacement is related to the quantity of fuel displaced from chamber 40 and hence the quantity of fuel in the charge delivered by the fuel injection pump.

The processor means 120 in a preferred form comprises a device to generate a train of clocking signals of a known frequency and a counter to determine in microseconds a count of the signals for a given interval such as between the occurrence of the commencement and termination of a fuel injection stroke. In a preferred embodiment, the signal emanating from the magnetic pickup 108 (electronically corrected for cam member position in the alternate embodiment wherein magnetic pickup 108 is not mounted on cam member 54) is employed to start the counter and the signal emanating from one of the transducers 102, 104, or 106 is employed to stop the counter. Upon termination of the counter, the count value is inversely indicative of the quantity of fuel in a fuel injection charge. It is generally preferable to start the counter with the termination of a stroke and end the counting with the commencement of a succeeding stroke since there normally will be a longer measuring interval and thus the accuracy of the measurement is increased in comparison to operating the counter between the time of commencement and termination of a single given stroke of plungers 38.

Numerous analytical and numerical methods may be employed to accomplish the overall objective of employing the actual count value (ACTUAL COUNT) and speed of the engine to regulate fuel delivery to the desired amount depending on how the engine is to respond to changes in load and other operating conditions.

In general, the electronic processing and control means of processor 120 compares the ACTUAL COUNT derived for a given pumping stroke to the count required to produce the desired fuel delivery (DESIRED COUNT) and adjusts the inlet metering means 32 so that the ACTUAL COUNT and DESIRED COUNT are equal for subsequent pumping strokes. The magnitude of the corrective adjustment (ADJUST value) depends on the difference between the ACTUAL COUNT and the DESIRED COUNT. The ACTUAL COUNT constitutes a feedback signal indicative of actual fuel delivery depending on speed. Values of the DESIRED COUNT at various operating conditions and operator demands are stored in electronic memory means 124 and may include the maximum allowable count at each speed depending on operating altitude, intake manifold pressure and engine coolant temperature. Memory tables may also be provided to include schedules of DESIRED COUNT versus speed according to operator demand to obtain preferred governing characteristics. The entry values of the memory matrices may be obtained by experimental means.

The control system may be a limited authority version where only the maximum allowable count is electronically controlled and lesser fuel deliveries are regulated by manual or mechanical manipulation of the metering valve, or the system may be a full authority version where the metering valve is electronically positioned for the entire operation.

Useful intermediate values may also be provided. For example, the ACTUAL COUNT value can be correlated with the speed of the engine to determine the quantity of fuel in a fuel charge (ACTUAL FUEL AMT). Similarly, the DESIRED COUNT value can be correlated with the speed of the engine to determine the desired quantity of fuel in a fuel charge (DESIRED FUEL AMT).

An ADJUST signal indicative of the corrective adjustment or ADJUST value is transmitted to a regulator means comprising a linear stepper motor 130 having a pin 132 which is axially displaced from the linear stepper motor in response to the ADJUST signal.

Inlet metering means 32 comprises in a preferred form an inlet metering valve 33 which is positioned angularly by a valve arm 142. In a conventional manner, the inlet valve 33 is constructed so that a variable flow restriction is formed at its interface with passage 30 depending upon the position of arm 142. Pin 132 bears against arm 142 to control this restriction and thus ultimately to control the flow of fuel into pumping chamber 40. With limited authority control the regulator means 128 is employed to serve merely as a maximum limiting device on the metering of fuel into the pumping chamber of the injection pump so that when a threshold valve position is obtained, pin 132 limits the further increase in the quantity of fuel introduced through the metering valve by defining a stop or governor position against arm 142. In this latter application, control of the metering means during the nongovernor mode is accomplished by conventional means.

Electronic processor means 120 may also be employed to adjust fuel delivery to the engine with changes in the operating temperature of the engine, the altitude of the engine, the manifold pressure, and other engine operating parameters. As schematically illustrated in Fig. 2, the engine temperature may be obtained by conventional means such as detecting the engine coolant temperature by means of sensor 152. The engine altitude may be obtained by conventional means such as detecting barometric pressure by means of sensor 154. The intake manifold pressure on supercharged engines may be obtained by conventional means such as detecting the manifold pressure by means of a sensor 156 which is similar to sensor 154. Signals indicative of the engine temperature (TEMP), engine altitude (ALT), and manifold pressure (PRESS) are transmitted to processor means 120.

A signal indicative of the engine demands of the operator may form an additional input into processor means 120. A throttle position sensor 158 of conventional form may be employed to communicate the operator demands to processor means 120. An OPERATOR signal indicative of the operator demands in terms of desired engine speed and/or load together with the actual engine speed are employed to locate or determine the DESIRED COUNT. Hence, the ADJUST signal transmitted to the regulator means to regulate the metering means may also be a function of the operator demands on the engine.

It is also noted that the present invention may be incorporated into the fuel injection pump in conjunction with the processing of various engine operating parameter measurements and the generation of signals relative thereto to adjust the timing of the fuel injection stroke via timing actuator 76 which adjustment functions to provide additional refinement in the timing of the fuel injection stroke relative to the top dead center of the associated engine cylinder as described above.

In summary, the electronic fuel control system may be constructed so that a continuous sequence of signals from the sensors is generated and processed to obtain essentially continuous regulation via the metering means of the quantity of fuel delivered to the pumping chamber thereby providing continuous updated control of the quantity of fuel in the charge delivered by the fuel injection pump.

The invention described in connection with the embodiment illustrated herein may be utilized and incorporated in other embodiments as desired. Accordingly, as will be apparent to persons skilled in the art, various modifications, adaptations and variations of the foregoing specific disclosures can be made without departing from the spirit and the teachings of the present invention.

- 20 -                    0135460

CLAIMS:

1.  A method for regulating the quantity of fuel delivered by a fuel injection system of an internal combustion engine employing a fuel injection pump driven by the engine and a fuel injection nozzle for each engine cylinder, the fuel injection pump having a fuel pumping means synchronized with the internal combustion engine for successively delivering high pressure fuel injection pulses to the fuel injection nozzles for injection of fuel charges into the cylinder of the engine and including plungers cooperating in a pumping chamber to provide a sequence of fuel injection strokes to produce said pulses, a fuel input means to provide fuel to the fuel pumping means including a metering means to control the flow of fuel to the pumping chamber, a pump actuating means having a shiftable cam member, the pump plungers moveable relative to the cam so that the contour of the cam member is translated into sequential fuel injection strokes, and a timing control piston in a hydraulic cylinder for shifting the cam member to advance or retard the timing of the fuel injection stroke according to the position of the piston in the hydraulic cylinder, comprising:

    (a)   generating a first signal indicative of the commencement of a fuel injection stroke;

    (b)   generating a second signal indicative of the termination of a fuel injection stroke;

    (c)   generating a third signal indicative of the speed of the engine; and

(d)    regulating said metering means in response to said first, second, and third signals.

2.   The method of claim 1 further comprising employing the first and second signals to obtain an ACTUAL COUNT VALUE indicative of the time interval of a fuel injection stroke.

3.   The method of claim 2 further comprising the steps of employing the first and second signals to obtain an ACTUAL COUNT value indicative of the time interval between the occurrence of the commencement and termination of a fuel injection stroke.

4.   The method of claim 2 further comprising the steps of employing the second signal of an injection stroke and the first signal of a succeeding injection stroke to obtain an ACTUAL COUNT value indicative of the time interval between the termination of a given injection stroke and commencement of the succeeding injection stroke.

5.   The method of claims 2 comprising the steps of employing the third signal to locate a corresponding DESIRED COUNT value in a memory matrix, and determining the difference between the ACTUAL COUNT value and the DESIRED COUNT value to obtain an ADJUST value for regulating said metering means.

- 22 -                    0135460

6. The method of claim 5 wherein said metering means comprises an inlet valve which provides a variable rate of fuel flow according to the position of said valve and further includes the step of regulating the position of the valve in response to an adjust signal indicative of the ADJUST value.

7. The method of claim 1 wherein steps (a)-(d) are cyclically repeated.

8. The method of claim 1 wherein step (b) comprises sensing the position of a plunger relative to a position on the cam member.

9. The method of claim 1 wherein step (a) comprises sensing a pulse in the hydraulic cylinder.

10. The method of claim 1 wherein step (a) comprises sensing a movement of the timing piston.

11. The method of claim 1 wherein step (a) comprises sensing a movement of the cam member.

12. The method of claim 3 further comprising generating a train of clocking signals and counting the clocking signals to obtain the ACTUAL COUNT value, the first signal of a given injection stroke initiating the counting and the second signal of a given injection stroke terminating the counting.

13. The method of claim 4 comprising generating a train of clocking signals and counting the clocking signals to obtain the ACTUAL COUNT value, the second signal of a given injection stroke initiating the counting and the first signal of a succeeding stroke terminating the counting.

14. The method of claim 1 further comprising:

    (e)  generating an operator signal indicative of the operator demands of the engine; and

    (f)  regulating said metering means in response to said operator signal.

15. The method of claim 14 further comprising employing the first and second signals to obtain an ACTUAL COUNT value indicative of the time interval of a fuel injection stroke.

16. The method of claim 15 further comprising the steps of employing the third signal and operator signal to locate a corresponding DESIRED COUNT valve in a memory matrix, and determining the difference between the ACTUAL COUNT value and the DESIRED COUNT value to obtain an ADJUST value for regulating said metering means.

- 24 -

0135460

17.  A method of monitoring the quantity of fuel in a charge delivered to a cylinder of an associated internal combustion engine by a fuel injection pump comprising:

(a)  generating a first signal indicative of the termination of a fuel injection stroke;

(b)  generating a second signal indicative of the commencement of the succeeding fuel injection stroke;

(c)  generating a third signal indicative of the speed of the engine;

(d)  processing said first, second, and third signals to obtain an ACTUAL FUEL AMT value indicative of the quantity of fuel delivered in one of said fuel injection charges.

18.  The method of claim 17 wherein step (d) further comprises generating a train of clocking signals and counting at least a portion of the clocking signals to obtain a FUEL COUNT value employed to obtain the ACTUAL FUEL AMT value.

19.  The method of claim 18 wherein the counting is started by the first signal and stopped by the second signal.

20.  The method of claim 18 wherein step (d) further comprises employing said third signal and FUEL COUNT value to obtain the ACTUAL FUEL AMT value.

21. The method of claim 20 wherein step (d) further comprises employing the third signal to determine a DESIRED FUEL AMT value from a memory means.

22. The method of claim 21 further comprising determining the difference between the DESIRED FUEL AMT value and ACTUAL FUEL AMT value to obtain an ADJUST value indicative of the desired quantity of fuel adjustment required for obtaining a desired quantity of fuel for a fuel injection charge.

23. The method of claim 21 further comprising generating a PRESS signal indicative of the manifold pressure and employing the PRESS signal to determine the DESIRED FUEL AMT value.

24. The method of claim 21 further comprising generating a TEMP signal indicative of the engine temperature and employing the TEMP signal to determine the DESIRED FUEL AMT value.

25. The method of claim 21 further comprising generating a ALT signal indicative of the altitude of the engine and employing the ALT signal to determine the DESIRED FUEL AMT value.

26. The method of claim 21 wherein steps (a)-(d) are cyclically repeated.

27.   In a fuel injection pump for an internal combustion engine having a fuel injection nozzle for each engine cylinder, a rotary input adapted to be driven by the engine, a fuel pumping means adapted to synchronize with the engine for successively delivering high pressure fuel injection pulses to the fuel injection nozzles for injection of fuel charges into the cylinders of the engine and including plungers in a pumping chamber adapted to provide a sequence of fuel injection strokes to produce said pulses, a fuel input means to provide fuel to the fuel pumping means including a metering means to control the flow of fuel to the pumping chamber, a pump actuating means having a shiftable cam member, the pump plungers moveable relative to the cam member to translate the counter of the cam member into sequential fuel injection strokes, and a timing control piston in a hydraulic cylinder for shifting the cam member to advance or retard the timing of the fuel injection stroke according to the position of the piston in the hydraulic cylinder, the improvement wherein the fuel injection pump further comprises:

a first sensor means to sense the commencement of a fuel injection stroke and generate a first signal indicative thereof;

a second sensor means to sense the termination of a fuel injection stroke and generate a second signal indicative thereof;

a third sensor means to sense the speed of the engine and generate a third signal indicative thereof;

a processor means for processing said first, second, and third signals to obtain an ADJUST signal indicative of a corrective adjustment in the quantity of fuel to be introduced into the pumping chamber; and

a regulator means responsive to said ADJUST signal to regulate the metering means.

28. The improved fuel injection pump of claim 27 wherein said processor means comprises a clocking means to generate a train of clocking signals and provide a FUEL COUNT indicative of the number of signals of a selective portion of said train.

29. The improved fuel injection pump of claim 28 wherein the FUEL COUNT is indicative of the number of clocking signals between the first and second signals.

30. The improved fuel injection pump of claim 28 wherein the processor means further comprises a memory means, said third signal determining a DESIRED COUNT from said memory means, and said ADJUST signal being determined by the difference between said FUEL COUNT and DESIRED COUNT.

31. The improved fuel injection pump of claim 27 wherein the metering means comprises an inlet valve having means to vary the flow of fuel to thereby control the quantity of fuel allowed to flow to the pumping chamber.

32.  The improved fuel injection pump of claim 31 wherein the regulator means comprises a stepper motor.

33.  The improved fuel injection pump of claim 27 wherein said cam member further includes one or more pairs of opposing lobes, the termination of each fuel injection stroke occurring when a plunger passes the midpoint of a lobe.

34.  The improved fuel injection pump of claim 32 wherein the second sensor means comprises a magnetic pickup.

35.  The improved fuel injection pump of claim 27 wherein the first sensor means comprises means for sensing a hydraulic pressure pulse in the hydraulic cylinder in reaction to the actuation of the fuel pumping means by the pump actuating means.

36.  The improved fuel injection pump of claim 35 wherein the first sensor means comprises a pressure transducer mounted at the end of the hydraulic cylinder.

37.   The improved fuel injection pump of claim 27 wherein the first sensor means comprises a motion transducer mounted to the hydraulic piston.

38.   The improved fuel injection pump of claim 27 wherein the first sensor means comprises a motion transducer mounted to the cam member.

39.   The improved fuel injection pump of claim 27 wherein the processor means employs the first, second and third signals to obtain a FUEL COUNT value indicative of the quantity of fuel in the pumping chamber for a fuel injection stroke.

FIG. 1

FIG. 2